# EUROPÄISCHE PATENTSCHRIFT

(11) **EP 0 472 701 B1**
(45) Veröffentlichungstag und Bekanntmachung des Hinweises auf die Patenterteilung: **11.05.1994**
(21) Anmeldenummer: 91906199.4
(22) Anmeldetag: 06.03.1991
(51) Int. Cl.: B61H 7/12, F16D 65/78

(54) **BREMSBELAGSHEIZUNG**
HEATING FOR BRAKE LININGS
CHAUFFAGE DE GARNITURES DE FREINS

(30) Priorität: 07.03.1990 DE 4007078
(43) Veröffentlichungstag der Anmeldung: 04.03.1992
(73) Patentinhaber: Magnetbahn GmbH, D-82319 Starnberg (DE)
(72) Erfinder: RASCH, Reinhard, W-8031 Hechendorf (DE)
(74) Vertreter: Vogl, Leo, Dipl.-Ing.
(86) Internationale Anmeldenummer: EP9100418
(87) Internationale Veröffentlichungsnummer: WO9113789

(56) Entgegenhaltungen:
- DE-A- 2 119 330
- DE-A- 2 933 446
- US-A- 3 899 061

## Beschreibung

Die vorliegende Erfindung betrifft eine mechanische Bremsvorrichtung, bei der ein oder beide Reibpartner Witterungseinflüssen ausgesetzt sind.

Bekannte Lösungen gehen von mechanischen oder chemischen Bremszusatzmitteln aus, wie z.B. Sand bei Schienenfahrzeugbremsen zur Erhöhung der Reibkraft zwischen gebremsten Rad und Schiene. Diese führen jedoch auch bei Reifbildung zu schlechteren Verzögerungswerten oder größerem Verschleiß der Reibpartner. Schlechte Verzögerungswerte bedingen jedoch eine größere Dimensionierung der Bremsen. Durch die schlechten Verzögerungswerte muß zusätzlich eine aufwendige Regelung bereitgestellt werden, um gewährleisten zu können, daß die Verzögerungswerte bei jeder Witterungsbedingung in etwa gleich sind und die zulässigen Verzögerungswerte weder übernoch unterschritten werden. Außerdem beträgt speziell bei Reif die Reibwertsbandbreite ca. 1 : 100, so daß überdimensional große Bremsen erforderlich wären.

Die vorliegende Erfindung hat daher die Aufgabe, bei allen Witterungsbedingungen, insbesondere bei Reifbildung einen genügend großen und in bestimmten Grenzen liegenden Haftreibungskoefizienten der beiden Reibpartner aufeinander bereits von der ersten Bremsung an sicherzustellen.

Diese Aufgabe wird durch das kennzeichnende Merkmal des Anspruchs 1 gelöst. Vorteilhafte Ausgestaltungen sind den Unteransprüchen entnehmbar.

Durch das Beheizen der Bremsen wird erreicht, daß alle im praktischen Betrieb vorkommenden "Reifsorten" und Vereisungen beseitigt werden und die Reibwerte innerhalb des normalen Auslegungsbereichs der Reibwertsbandbreite des Bremssystems liegen.

Die Erfindung wird nachfolgend am Beispiel einer Zwangsbremse dargestellt, wie sie bei Magnetschwebefahrzeugen eingesetzt wird.

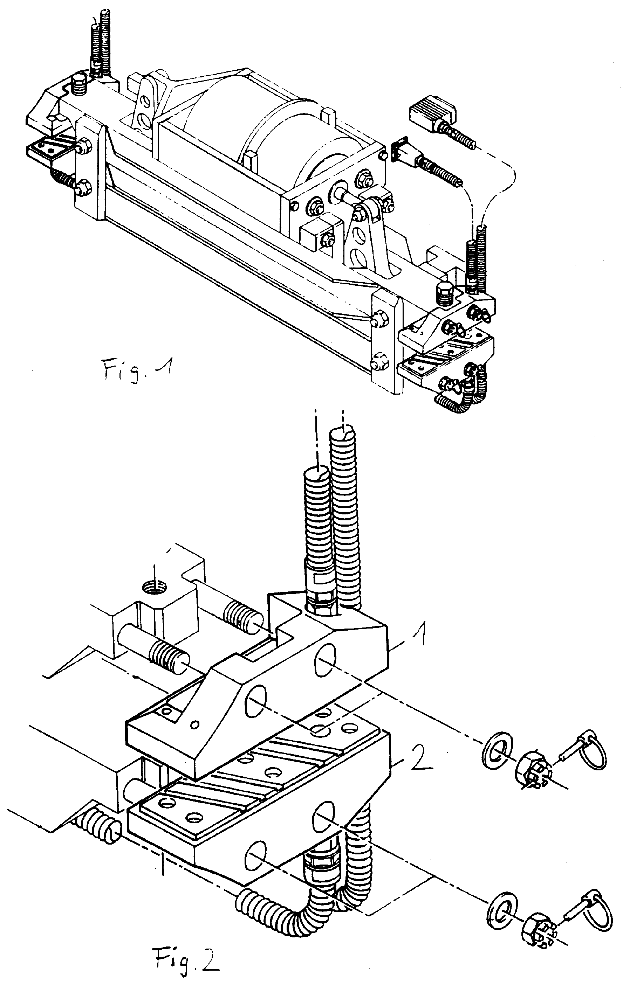

Fig.1 zeigt eine Zangenbremseinrichtung, die bestimmungsgemäß form- und kraftschlüssig verbunden ist mit einem nicht dargestellten Magnetbahnfahrzeug, wie es beispielsweise aus der DE-OS .30 42 497.6.bekannt ist.

Fig. 2 zeigt eine obere Bremsbacke 1 und eine untere Bremsbacke 2 der Zwangsbremse aus Fig. 1. Diese beiden Bremsbeläge werden zum Bremsen gegeneinander auf das zwischen ihnen verlaufende, nicht dargestellte Fahr-Bremsprofil des Magnetbahnschienenweges gepreßt.

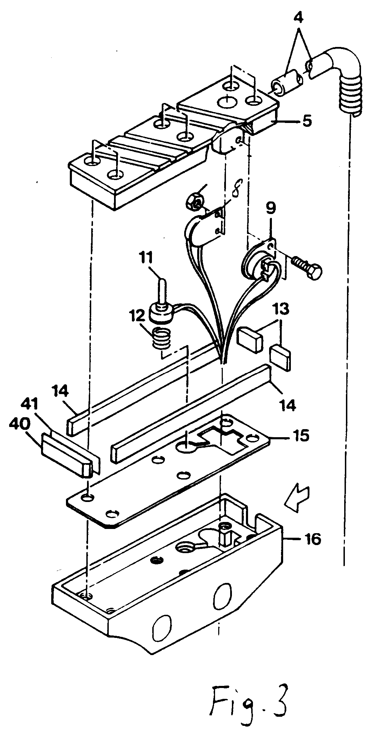

Fig. 3 zeigt eine mögliche Ausführungsart der unteren Bremsbacke 2. Man erkennt, daß der Bremsbelag 5 durch die in ihn hineinragende Heizpatrone 4 geheizt wird. Mit den Temperaturwächtern.8,9 wird die Temperatur des Bremsbelags 5 überwacht und mit dem Thermoelement 11 die Heizpatrone und der Bremsbelag mittels einer nicht dargestellten Regelungsschaltung in einen gewünschten Temperaturbereich gehalten. Die vorgenannten Bauteile sind in der Bremsplatte 16 untergebracht, in der sie von den Isolationsleisten 13, 14, 40 der Isolationsplatte 15 und der Distanzfolie 41 umgeben werden.

Die Heizung kann selbstverständlich auch aus einen sich selbstregelnden und -überwachenden elektrischen Heizstab bestehen oder mit einer anderen Energiequelle betrieben werden. Vor allem bei Anwendungsgebieten wie Bremsen herkömmlicher Schienenbahnen oder sonstiger Kraftfahrzeuge kann die Heizung überwiegend mit Abwärme der Antriebsmotoren betrieben werden, nachdem diese ihre Betriebstemperaturen erreicht haben.

Bei Magnetbahnen hat sich herausgestellt, daß sich Verzögerungswerte, die im Auslegungsbereich für eis- und reiffreie Schienen liegen, bei etwa 80 ° C Bremsbelagstemperatur bereits von der ersten Bremsung an realisieren lassen. Somit wird erreicht, daß die Bremsen auch bei Verreifung und Vereisung des Schienenfahrzeugwegs sicher mit den erforderlichen Werten von der ersten Bremsung an verzögern. Somit entfällt eine überdimensionale Bremse und regelungstechnisch sehr aufwendige und teuere Bremsensteuerung.

Die erforderliche Bremsbelagstemperatur hängt unter anderem von dem Werkstoff, der Größe und der Formgebung des Bremsbelages ab. Die Heizung kann so ausgelegt sein, daß sie entweder nur bei Vereisungs- oder Verreifungsgefahr oder ständig betrieben wird. Bei einer ständigen Beheizung arbeiten die Bremsbeläge von Betriebsbeginn an auf ihren Arbeitspunkt mit optimalen Reibwerten.

## Patentansprüche

1. Witterungsunabhängige mechanische Bremsvorrichtung, bei der ein oder beide Reibpartner Witterungsbedingungen ausgesetzt sind, **dadurch** **gekennzeichnet,**
daß der Bremsbelag beheizt wird.

2. Bremsvorrichtung nach Anspruch 1, **dadurch gekennzeichnet,**
daß der Bremsbelag dauernd oder nur unter bestimmten Witterungsbedingungen beheizt wird.

3. Bremsvorrichtung nach Anspruch 2, **dadurch gekennzeichnet,**
daß die Heizung elektrisch betrieben wird.

4. Bremsvorrichtung nach Anspruch 3, **dadurch** **gekennzeichnet,**
daß die Heizung elektronisch geregelt wird.

5. Bremsvorrichtung nach Anspruch 3, **dadurch gekennzeichnet,**
daß die Bremsvorrichtung aus selbstregelndem Heizstab besteht.

6. Bremsvorrichtung nach Anspruch 1 oder 2, **dadurch gekennzeichnet,**
daß die Heizung mit anfallender Abwärme betrieben wird.

7. Bremsvorrichtung nach Anspruch 6, **dadurch** **gekennzeichnet,**
daß die Heizung bei Bedarf zusätzlich mit anderen Energiequellen betrieben wird.

8. Bremse nach einem der vorgehenden Ansprüche , **dadurch gekennzeichnet,**
daß sie in Magnetbahnfahrzeugen eingesetzt wird.

9. Bremse nach einem der Ansprüche 1 bis 7, **dadurch gekennzeichnet,**
daß sie in Straßen-Kraftfahrzeugen eingesetzt wird.

10. Bremse nach einem der Ansprüche 1 bis 7, **dadurch** **gekennzeichnet,**
daß sie in Schienenfahrzeugen eingesetzt wird.

## Claims

1. Weather-independent mechanical brake device, in which one or both friction partners are exposed to weather conditions, characterised thereby that the brake lining is heated.

2. Brake device according to claim 1, characterised therby that the brake lining is heated constantly or only in certain weather conditions.

3. Brake device according to claim 2, characterised thereby that heating is electrically operated.

4. Brake device according to claim 3, characterised thereby that the heating is electronically regulated.

5. Brake device according to claim 3, characterised thereby that the brake device consists of self-regulating heating rod.

6. Brake device according to claim 1 or 2, characterised thereby that the heating is operated with available waste heat.

7. Brake device according to claim 6, characterised thereby that the heating is operated in the case of need additionally with other energy sources.

8. Brake device according to one of the preceding claims, characterised thereby that it is used in magnetic track vehicles.

9. Brake device according to one of claims 1 to 7, characterised thereby that it is used in road vehicles.

10. Brake device according to one of claims 1 to 7, characterised thereby that it is used in rail vehicles.

## Revendications

1. Dispositif de freinage mécanique indépendant des intempéries, dans lequel un ou chacun des deux participants à la friction est exposé à des conditions d'intempéries, caractérisé
en ce que la garniture de frein est chauffée.

2. Dispositif de freinage selon la revendication 1, caractérisé
en ce que la garniture de frein est chauffée en permanence ou seulement dans des conditions météorologiques déterminées.

3. Dispositif de freinage selon la revendication 2, caractérisé
en ce que le chauffage est alimenté électriquement.

4. Dispositif de freinage selon la revendication 3, caractérisé
en ce que le chauffage est soumis à une régulation électronique.

5. Dispositif de freinage selon la revendication 5, caractérisé
en ce que le dispositif de freinage est constitué par un élément chauffant autorégulateur.

6. Dispositif de freinage selon la revendication 1 ou 2, caractérisé
en ce que le dispositif de chauffage est alimenté par une chaleur perdue.

7. Dispositif de freinage selon la revendication 6, caractérisé
en ce qu'au besoin le chauffage est alimenté en supplément par d'autres sources d'énergie.

8. Dispositif de freinage selon une des revendications précédentes, caractérisé
en ce qu'il est utilisé sur des véhicules circulant sur voies magnétiques.

9. Dispositif de freinage selon une des revendications 1 à 7, caractérisé
en ce qu'il est utilisé sur des véhicules automobiles routiers.

10. Dispositif de freinage selon une des revendications 1 à 7, caractérisé
en ce qu'il est utilisé sur des véhicules ferroviaires.
